# EUROPEAN PATENT APPLICATION

(11) **EP 3 165 503 A1**
(43) Date of publication of application: **10.05.2017**
(21) Application number: 15192992.4
(22) Date of filing: 04.11.2015
(51) Int. Cl.: C01B 3/32

(54) **PROCESS FOR PRODUCING HYDROGEN AND HEAT AND/OR POWER**

(71) Applicant: Shell Internationale Research Maatschappij B.V., 2596 HR Den Haag (NL)
(72) Inventor: WUBBOLTS, Frank Emile, 1031 HW Amsterdam (NL); WESKER, Evert, 1031 HW Amsterdam (NL); KRAMER, Gert Jan, 1031 HW Amsterdam (NL); IYER, Mahesh Venkataraman, Houston, TX 77057 (US)
(74) Representative: Matthezing, Robert Maarten

(57) **Abstract**

The invention relates to a process for producing hydrogen. The process comprises the following steps. Hydrocarbons and/or carbohydrates are reformed in a reformer to obtain hydrogen and carbon monoxide. Hydrogen is separated to obtain a stream comprising hydrogen and a stream comprising carbon monoxide. Carbon monoxide and a stream comprising at least 90 v/v% oxygen are introduced into a combustor. Carbon monoxide is combusted to carbon dioxide, and the combustion product stream is expanded across a turbine to generate (electrical) power.

## Description

### Field of the invention

The invention relates to a process for producing a hydrogen and heat and/or power. The invention especially relates to producing relatively pure hydrogen from hydrocarbons and/or carbohydrates. In the process, heat and/or power, especially electric power, is produced, which may be used in the overall process or for a different purpose.

### Background to the invention

One known process to produce hydrogen comprises (steam) reforming followed by a water-gas shift reaction. Syngas, i.e. a gas comprising hydrogen and carbon monoxide, is produced in the (steam) reforming step. Additional hydrogen is formed with the water-gas shift reaction.

During steam methane reforming, for example, the following reaction takes place:

CH₄ + H₂O ⇄ CO + 3H₂

Additional hydrogen is formed with the water-gas shift reaction:

CO + H₂O ⇄ CO₂ + H₂

For some applications the hydrogen formed is liquefied.

The (steam) reforming requires energy, especially heat, as it is a strongly endothermic reaction. The water-gas shift reaction is mildly exothermic. Hydrogen liquefaction requires energy, for example electrical power. The required energy, especially heat, for the (steam) reforming may be generated by means of combustion of fuel. The required energy, especially electrical power, for the liquefaction may come from, for example, a gas turbine fired on natural gas. A disadvantage is that fuel combustion and natural gas combustion result in exhaust gases with a low concentration of carbon dioxide. The capture of carbon dioxide from such exhaust gases requires a separation process to concentrate the carbon dioxide, and pressurization for sequestration.

US20110179799 describes a process in which power is generated using a combustor in which a fuel is combusted using a stream comprising at least 85% oxygen. This combustion produces water as by-product. Hydrogen may be separated using pressure swing adsorption technology. A stream comprising carbon dioxide may be sequestered.

WO2007021909 describes a process in which two oxy-fuel combustors are used to produce a hydrogen comprising stream and power. A stream comprising carbon dioxide may be sequestered. A disadvantage of this procedure are the amounts of water and steam that are processed and which need to be heated.

There is a need for an improved process for the production of hydrogen.

### Summary of the invention

In the process according to the invention, hydrogen is produced. The process comprises the following steps:
(a) reforming hydrocarbons and/or carbohydrates in a reformer to obtain hydrogen and carbon monoxide, and
(b) separating hydrogen from the product of step (a), to obtain a stream comprising hydrogen and a stream comprising carbon monoxide, and
(c) introducing at least a part of the stream comprising carbon monoxide as obtained in step (b) and a stream comprising at least 90 v/v% oxygen into a combustor, and
(d) combusting carbon monoxide to carbon dioxide in the combustor of step (c), and
(e) expanding the combustion product stream obtained in step (d) across a turbine to generate power, preferably electrical power.

One advantage of the present invention is that the obtained carbon dioxide is concentrated and can be sequestered.

Another advantage is that the (electrical) power obtained in step (e) may be used to liquefy the obtained hydrogen and/or for air separation.

A further advantage is that the heat generated in step (e) may be used for reforming step (a).

There is no need to fire fuel to drive a water-gas shift reaction, as the process of the invention can be performed without a step in which a water-gas shift reaction takes place.

And another advantage is that a stream comprising mainly carbon monoxide is combusted with oxygen. Mainly carbon dioxide is produced. This in contradiction to oxy-fueling hydrocarbons which results in water and carbon dioxide. In a process according to the present invention there is no need to concentrate the carbon dioxide as the stream comprising carbon dioxide which is formed in the present process is suitable to be used for sequestration.

### Figure

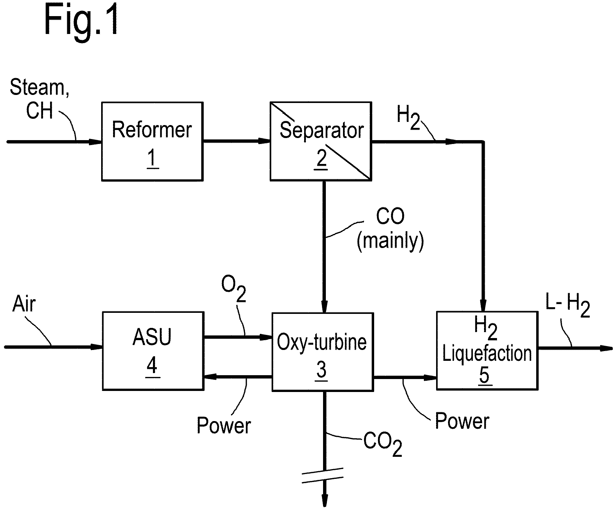

Figure 1 illustrates one embodiment of the present invention.

### Detailed description of the invention

The present invention relates to a process for producing hydrogen comprising the following steps:
(a) reforming hydrocarbons and/or carbohydrates in a reformer to obtain hydrogen and carbon monoxide, and
(b) separating hydrogen from the product of step (a), to obtain a stream comprising hydrogen and a stream comprising carbon monoxide, and
(c) introducing at least a part of the stream comprising carbon monoxide as obtained in step (b) and a stream comprising at least 90 v/v% oxygen into a combustor, and
(d) combusting carbon monoxide to carbon dioxide in the combustor of step (c), and
(e) expanding the combustion product stream obtained in step (d) across a turbine to generate power, preferably electrical power.

A mixture or a stream comprising hydrogen and carbon monoxide may also be referred to as syngas. A suitable method to produce syngas is the Shell Gasification Process. A comprehensive survey of this process can be found in the Oil and Gas Journal, September 6, 1971, pp 86-90.

Preferably the reforming in step (a) is performed by means of steam reforming, steam methane reforming (SMR), adiabatic steam reforming (ASR), fired steam reforming, auto-thermal steam reforming (ATR), auto thermal reforming with gas heated reforming (GHR), adiabatic oxidative reforming, auto-thermal reforming, partial oxidation, and/or catalytic partial oxidation. In case of ATR combined with GHR, the ATR and the GHR can be linked in different ways; the configuration in which feed gas passes through the GHR and ATR in series is preferred.

In step (a) preferably steam and hydrocarbons and/or carbohydrates are contacted in a reformer, preferably a steam reformer, more preferably a steam methane reformer, at a temperature in the range of from 500 to 1100 °C. More preferably steam and methane are contacted in a reformer, preferably a steam reformer, more preferably a steam methane reformer. Step (a) preferably is performed at a pressure in the range of from 10 to 35 bara. In step (b) hydrogen preferably is separated by means of a membrane, preferably a membrane comprising palladium, or a pressure swing absorption unit.

Preferably the stream comprising at least 90 v/v% oxygen used in step (c) is obtained by means of air separation.

In steps (c) and (d) a stream comprising carbon monoxide and a stream comprising at least 90 v/v% oxygen are introduced into a combustor, and carbon monoxide is combusted to produce carbon dioxide. The combustor used preferably is an oxy-fuel combustor, or a combustor combined with a turbine.

In case an oxy-turbine is used, at least a part of the stream comprising carbon monoxide as obtained in step (b) and a stream comprising at least 90 v/v% oxygen are introduced into the oxy-turbine in step (c), and step (d) and step (e) take place in in this oxy-turbine.

Oxy-fuel combustion is the process of burning a fuel using relatively pure oxygen instead of air as the primary oxidant. As there is no or no significant amount of nitrogen present in the oxygen stream, the fuel consumption is reduced and higher flame temperatures are possible as compared to combustion with air.

Preferably flue gas from the oxy-combustion is recirculated to control the combustion temperature.

Preferably the heat produced in step (d) is used to provide heat to the process of step (a).

Preferably the power produced in step (e) is used to liquefy hydrogen obtained in step (b).

Preferably the power produced in step (e) is used to separate oxygen from air in an air separation unit (ASU) to produce a stream comprising at least 90 v/v% oxygen for step (c).

### Figure

The present invention will be further elucidated with reference to the drawing. Figure 1 shows a schematic diagram of an embodiment of a line-up for a process according to the invention.

Steam and hydrocarbon enter a reformer (1). Hydrogen rich syngas is introduced from reformer (1) into separator (2). A separated stream comprising carbon monoxide is introduced from separator (2) into oxy-turbine (3). Air is introduced into air separation unit (4). Oxygen is introduced from ASU (4)into oxy-turbine (3). Power from the oxy-turbine is provided to the ASU (4). Separated hydrogen is introduced from separator (2) into the hydrogen liquefaction unit (5). Power from the oxy-turbine is provided to the hydrogen liquefaction unit (5). Liquid hydrogen is removed from the hydrogen liquefaction unit (5). A stream comprising concentrated carbon dioxide is removed from the oxy-turbine (3).

## Claims

1. A process for producing hydrogen comprising the following steps:
(a) reforming hydrocarbons and/or carbohydrates in a reformer to obtain hydrogen and carbon monoxide, and
(b) separating hydrogen from the product of step (a), to obtain a stream comprising hydrogen and a stream comprising carbon monoxide, and
(c) introducing at least a part of the stream comprising carbon monoxide as obtained in step (b) and a stream comprising at least 90 v/v% oxygen into a combustor, and
(d) combusting carbon monoxide to carbon dioxide in the combustor of step (c), and
(e) expanding the combustion product stream obtained in step (d) across a turbine to generate power, preferably electrical power.

2. The process according to claim 1, wherein in step (a) reforming is performed by means of steam reforming, steam methane reforming (SMR), adiabatic steam reforming (ASR), fired steam reforming, auto-thermal steam reforming (ATR), auto thermal reforming with gas heated reforming (GHR), adiabatic oxidative reforming, auto-thermal reforming, partial oxidation, and/or catalytic partial oxidation.

3. The process according to claim 1 or 2, wherein in step (a) steam and hydrocarbons and/or carbohydrates are contacted in a reformer, preferably a steam reformer, more preferably a steam methane reformer, at a temperature in the range of from 500 to 1100 °C.

4. The process according to claim 3, wherein in step (a) steam and methane are contacted in a reformer, preferably a steam reformer, more preferably a steam methane reformer.

5. The process according to claim 3 or 4, wherein step (a) is performed at a pressure in the range of from 10 to 35 bara.

6. The process according to any one of the above claims, wherein in step (b) hydrogen is separated by means of a membrane, preferably a membrane comprising palladium, or a pressure swing absorption unit.

7. The process according to any one of the above claims, wherein the stream comprising at least 90 v/v% oxygen used in step (c) is obtained by means of air separation.

8. The process according to any one of the above claims, wherein the heat produced in step (d) is used to provide heat to the process of step (a).

9. The process according to any one of the above claims, wherein the power produced in step (e) is used to liquefy hydrogen obtained in step (b).

10. The process according to any one of the above claims, wherein the power produced in step (e) is used to separate oxygen from air in an air separation unit (ASU) to produce a stream comprising at least 90 v/v% oxygen for step (c).
